(19) Europäisches Patentamt
European Patent Office
Office européen des brevets

(11) **EP 4 645 261 A1**

(12) **EUROPEAN PATENT APPLICATION**

(43) Date of publication:
**05.11.2025 Bulletin 2025/45**

(21) Application number: **25168982.4**

(22) Date of filing: **07.04.2025**

(51) International Patent Classification (IPC):
**G06V 20/56** (2022.01)     **G06V 20/58** (2022.01)

(52) Cooperative Patent Classification (CPC):
**G06V 20/56; G06V 20/58**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 JP 2024074143**

(71) Applicant: **CANON KABUSHIKI KAISHA Tokyo 146-8501 (JP)**

(72) Inventor: **TSUKAHARA, Azusa Tokyo, 146-8501 (JP)**

(74) Representative: **Canon Europe Limited European Intellectual Property Group 4 Roundwood Avenue Stockley Park Uxbridge UB11 1AF (GB)**

(54) **IMAGE PROCESSING DEVICE, IMAGE PROCESSING METHOD, AND STORAGE MEDIUM**

(57)     An image processing device installed in a moving object includes an image acquisition unit configured to acquire an image, an information acquisition unit configured to set a feature point in the image, and to acquire height information indicating an elevation of the feature point, and depth information indicating a distance to the feature point, a reference-plane height calculation unit configured to calculate a height of a predetermined reference plane as a reference-plane height based on the height information, and a determination unit configured to determine whether the feature point is a feature point indicating a target obstructing movement of the moving object, by using the reference-plane height.

# FIG. 1A

## Description

BACKGROUND OF THE INVENTION

Field of the Invention

The present invention relates to an image processing device detecting an obstacle from an image.

Description of the Related Art

In recent years, advanced driver-assistance systems (ADAS) and automatic driving techniques have attracted attention. To realize the ADAS and the automatic driving techniques, it is necessary to detect a region (hereinafter, an obstacle) where a vehicle cannot pass through, such as a region where a falling object or a bump like a groove is present on a road.

Japanese Patent Application Laid-Open No. 2018-156222 discusses a method of detecting an obstacle by using an image. The method discussed in Japanese Patent Application Laid-Open No. 2018-156222 determines that an obstacle is present in a case where a three-dimensional position estimated by structure from motion (SfM) is higher than a predetermined value. A value acquired by the SfM is a value with an indefinite scale. The scale indicates a magnitude degree of one unit for a certain index. In other words, it is not defined that one unit of the value acquired by the SfM is how many meters. Thus, conversion to an actual scale is performed using a calibration value such as positional information on an imaging device that has captured the image. However, the method discussed in Japanese Patent Application Laid-Open No. 2018-156222 may have a possibility of deterioration in determining accuracy of an obstacle as a result of deterioration in accuracy of the calibration value. This is because the calibration value may vary with time or depending on an environment in a vehicle. For example, the positional information such as an installation height of the imaging device can be changed depending on a load amount or distribution of the load.

In consideration of the above-described issue, Japanese Patent Application Laid-Open No. 2023-39777 discusses a method of correcting the calibration value by estimating the installation height of the imaging device.

Since the calibration value is corrected in the existing method, an error caused by insufficient correction may remain.

SUMMARY OF THE INVENTION

According to an aspect of the present invention, there is provided an image processing device as specified in claims 1 to 17. According to a second aspect of the present invention, there is provided an image processing method as specified in claim 18. According to a third aspect of the present invention, there is provided a storage medium as specified in claim 19.

Further objects and features of the present invention will be described in embodiments described below.

Further features of the present invention will become apparent from the following description of embodiments with reference to the attached drawings.

BRIEF DESCRIPTION OF THE DRAWINGS

Figs. 1A and 1B are diagrams illustrating an imaging device including an image processing device according to a first embodiment.
Fig. 2 is a flowchart illustrating operation of a moving object according to the first embodiment.
Figs. 3A and 3B are diagrams illustrating the image processing device according to the first embodiment.
Fig. 4 is a flowchart of positional information acquisition processing according to the first embodiment.
Figs. 5A and 5B are diagrams illustrating feature points according to the first embodiment.
Fig. 6 is a diagram illustrating a triangulation method according to the first embodiment.
Fig. 7 is a flowchart of reference-plane height calculation processing according to the first embodiment.
Fig. 8 is a flowchart of obstacle determination processing according to the first embodiment.
Figs. 9A to 9D are diagrams schematically illustrating a configuration of an image processing device according to a second embodiment.
Fig. 10 is a diagram illustrating an exit pupil according to the second embodiment.
Figs. 11A and 11B are diagrams illustrating the image processing device according to the second embodiment.
Figs. 12A and 12B are diagrams illustrating a block matching method according to the second embodiment.
Fig. 13 is a diagram illustrating an imaging device according to a modification sample of the second embodiment.

DESCRIPTION OF THE EMBODIMENTS

The present invention will now be described in detail with reference to embodiments and drawings. The present invention is not limited to contents described in the embodiments. The embodiments can also be appropriately combined.

(Device Configuration)

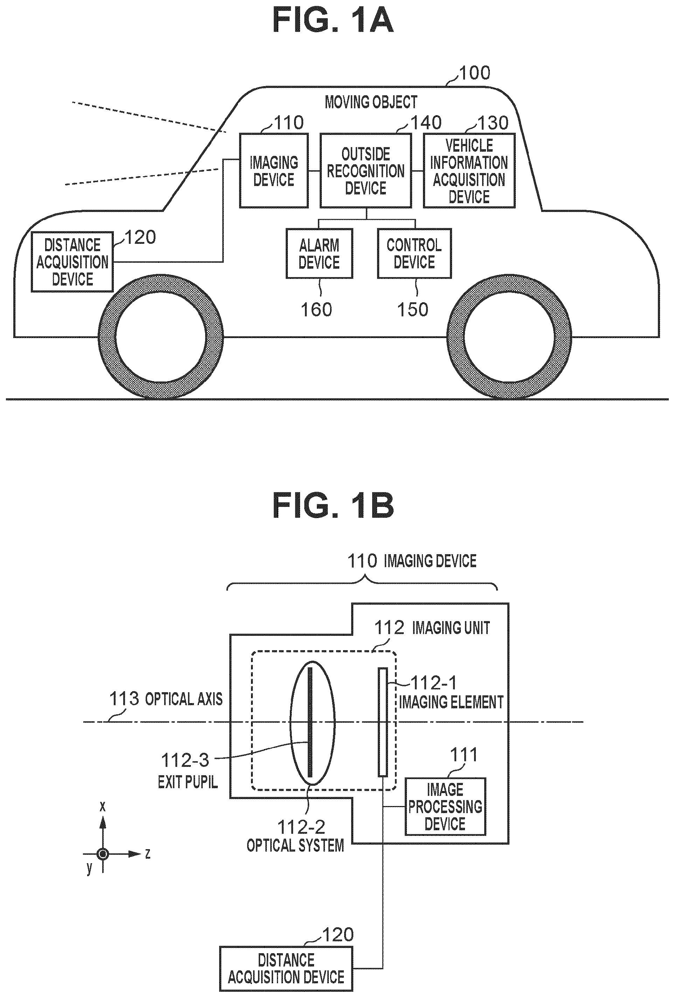

Figs. 1A and 1B are diagrams schematically illustrating a configuration of an imaging device according to a first embodiment of the present invention.

In Fig. 1A, a moving object 100 includes an imaging device 110, a distance acquisition device 120, a vehicle information acquisition device 130, an outside recognition device 140, a control device 150, and an alarm device 160.

The moving object 100 is an autonomously movable object by a power source. Examples of the moving object 100 include a vehicle, a vessel, an aircraft, a drone, and an industrial robot. In the following, the moving object 100 is described as a vehicle.

In Fig. 1B, the imaging device 110 includes an image processing device 111 and an imaging unit 112.

The imaging unit 112 includes an imaging element 112-1 and an optical system 112-2. The image processing device 111 can be configured with a logic circuit. As another form of the image processing device 111, the image processing device 111 can also include a central processing unit (CPU) and a memory storing calculation processing programs.

The optical system 112-2 is an imaging lens of the imaging device 110, and has a function of forming an image of an object on the imaging element 112-1 (on imaging element). The optical system 112-2 includes a plurality of lens groups (not illustrated), a diaphragm (not illustrated), and the like, and includes an exit pupil 112-3 at a position separated from the imaging element 112-1 by a predetermined distance. In the present specification, a z-axis is parallel to an optical axis 113 of the optical system 112-2. An x-axis and a y-axis are perpendicular to each other, and are perpendicular to the optical axis.

The imaging element 112-1 is formed from a complementary metal-oxide semiconductor (CMOS) or a charge-coupled device (CCD). An object image formed on the imaging element 112-1 through the optical system 112-2 is photoelectrically converted by the imaging element 112-1, and an image signal based on the object image is generated.

For example, the imaging device 110 is installed at a predetermined position near a front (or rear) windshield inside the moving object 100. The imaging unit 112 images a front visual field (or rear visual field) of the moving object 100.

The distance acquisition device 120 is a sensor for acquiring distance information around the vehicle. For example, the distance acquisition device 120 can include a millimeter wave radar or a light detection and ranging (LiDAR) device.

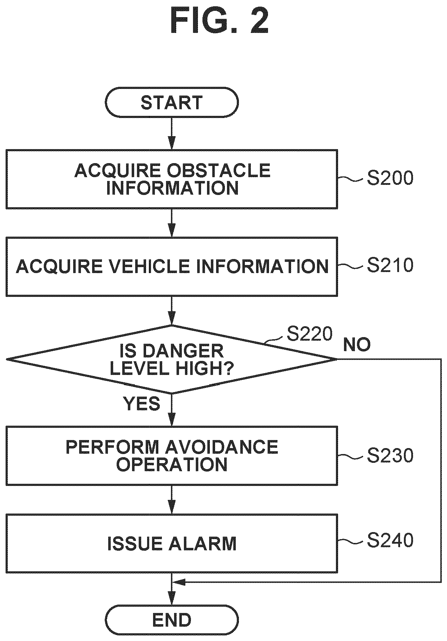

Fig. 2 is a flowchart illustrating operation of the moving object 100 according to the present embodiment.

In step S200, the image processing device 111 first acquires image information from the imaging device 110, and acquires the distance information from the distance acquisition device 120. The image processing device 111 acquires information on an obstacle from the image information and the distance information acquired from the distance acquisition device 120.

Details will be described below.

In step S210, the vehicle information acquisition device 130 acquires one or more pieces of vehicle information (information on moving object) from among a moving speed, a roll angle, a pitch angle, and the like.

In step S220, the outside recognition device 140 recognizes a danger level of an outside from the information on the obstacle acquired by the imaging device 110 and the information on the moving object acquired by the vehicle information acquisition device 130. For example, the outside recognition device 140 recognizes whether a danger exists in a case where the moving object 100 moves at a current speed in a current moving direction. More specifically, the outside recognition device 140 can recognize that a danger exists in a case where the moving object 100 is moving and an obstacle is present in a short distance in the moving direction. In a case where the outside recognition device 140 recognizes that the danger level is low (NO in step S220), the processing ends.

In a case where the outside recognition device 140 recognizes that the danger level is high (YES in step S220), the control device 150 controls the moving object 100 to avoid or reduce the danger in step S230. For example, the control device 150 can brake the moving object 100. Alternatively, the control device 150 can change the moving direction.

In the case where the outside recognition device 140 recognizes that the danger level is high, the alarm device 160 issues an alarm to a passenger or a person around the moving object 100 in step S240. For example, the alarm device 160 performs processing for generating an alarm sound, or processing for displaying alarm information on a display screen of a car navigation system, a head-up display, and the like. Alternatively, the alarm device 160 issues an alarm to a driver of the moving object 100 by, for example, vibrating a seat belt or a steering wheel.

(Description of Image Processing Device)

The image processing device 111 will now be described below. The image processing device 111 acquires three-dimensional position information, outputs a result of determination whether an obstacle is present at a position of the three-dimensional position information, and calculates a distance value of the obstacle. A scale of the three-dimensional position information acquired at this time can be indefinite.

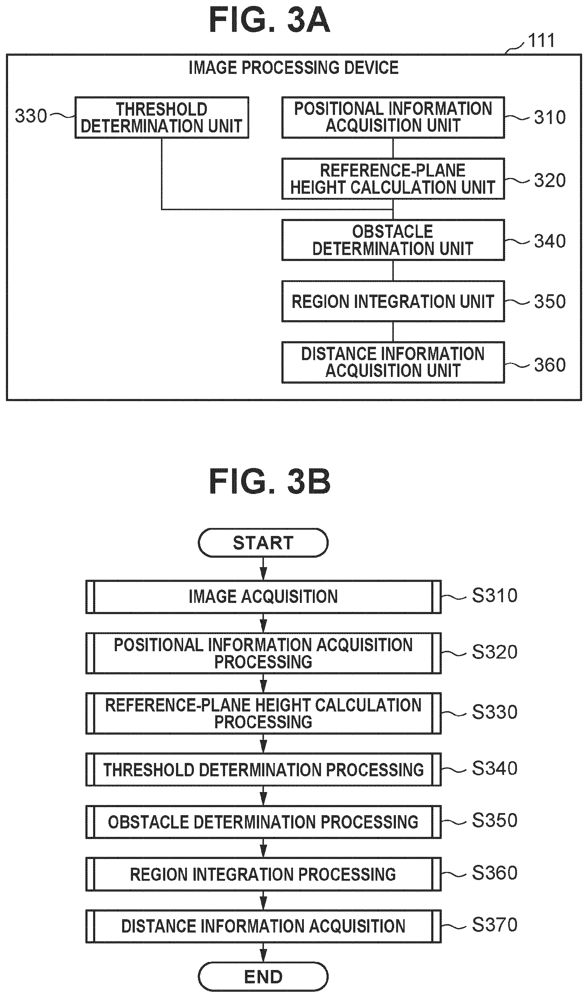

Fig. 3A is a diagram schematically illustrating a configuration of the image processing device 111 according to the present embodiment. In Fig. 3A, the image processing device 111 includes a positional information acquisition unit 310, a reference-plane height calculation unit 320, a threshold determination unit 330, an obstacle determination unit 340, a region integration unit 350, and a distance information acquisition unit 360. Fig. 3B is a flowchart illustrating operation of the image processing device 111 according to the present embodiment. When image processing according to the present embodiment is started, the processing proceeds to step S310.

In step S310, the imaging device 110 performs imaging to generate/acquire an image, and store the acquired image in a main body memory (not illustrated). In other words, image acquisition is performed.

In addition, processing for correcting imbalance of a light amount mainly caused by vignetting of the optical system 112-2 can also be performed on the image acquired in step S310. More specifically, imbalance of the light amount can be corrected by performing correction such that a luminance value of the image becomes substantially constant irrespective of an angle of view, based on a result obtained by previously imaging a surface light source having a fixed luminance by the imaging device 110. Alternatively, filter processing using a bandpass filter, a lowpass filter, or other filters can also be performed on the acquired image to reduce, for example, influence of light shot noise and the like generated in the imaging element 112-1. Alternatively, the image can be reduced to reduce a calculation cost. To perform determination of an obstacle with high resolution, resolution of the image can also be increased by a known method.

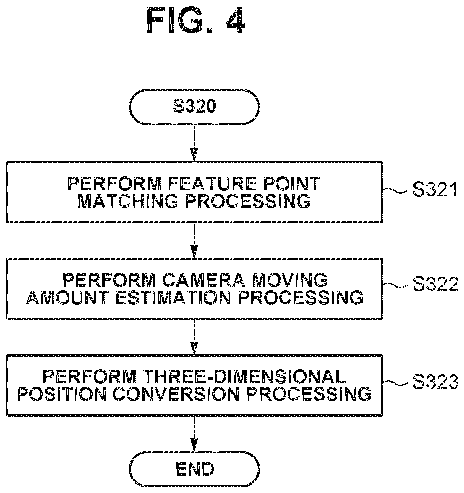

In step S320, the positional information acquisition unit 310 calculates a three-dimensional position information from the acquired image. A known optional method can be used, but a method using the SfM will be described with reference to Fig. 4. Fig. 4 is a detailed flowchart of a processing flow in step S320.

In step S321, feature point matching of images acquired in step S310 is performed by a well-known method. At this time, it is necessary to acquire at least two images (images It1 and It2). These images are captured at different time points t1 and t2.

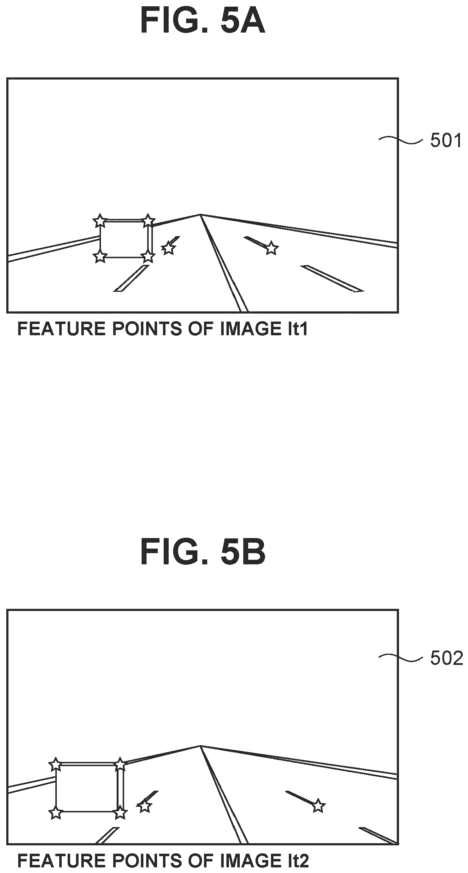

The feature point matching will specifically be described with reference to Figs. 5A and 5B. First, feature points of the image It1 and feature points of the image It2 are calculated. A known optional method can be used, but in this example, Harris corner detection algorithm is used. Fig. 5A illustrates feature points 501 calculated from the image It1. Fig. 5B illustrates feature points 502 calculated from the image It2. The feature points are marked with stars. Next, the feature points 501 and the feature points 502 are made correspond to each other. A known optional method can be used, but in this example, Kanade-Lucas-Tomasi (KLT) feature tracker algorithm is used.

The algorithm used for calculation of the feature points and feature amounts is not limited to the described method. Features from accelerated segment test (FAST), binary robust independent elementary features (BRIEF), oriented FAST and rotated BRIEF (ORB), or the like can also be used.

Matching can also be performed after a feature point at a specific pixel position is removed. For example, there is a high possibility that an effective feature point cannot be calculated in a region of a hood or the like. By removing such a point, or limiting acquisition of such a point, subsequent three-dimensional position information calculation can be performed with high accuracy.

In step S322, a rotation matrix R representing a rotation moving amount of a camera between frames, and a translation vector T representing a translational moving amount of the camera between the frames are estimated by using a correspondence result acquired in step S321.

First, a fundamental matrix F is determined. In a case where correspondence points are denoted by $x_1$ and $x_2$, relationship of formula 1 is established. Note that $x_1$ and $x_2$ are three-dimensional vectors that represent, in a simultaneous coordinate system, coordinates of the correspondence points in an image coordinate system. For example, five-point algorithm can determine the fundamental matrix F by obtaining image positions of at least five sets of correspondence points. Further, eight-point algorithm can determine the fundamental matrix F by obtaining image positions of at least eight sets of correspondence points. In a case where the number of correspondence points is greater than the necessary number of correspondence points, a least squares solution can also be adopted. Alternatively, a random sample consensus (RANSAC) method can also be used, and a result obtained by removing an outlier can also be adopted.

$$x_1^T F x_2 = 0 \tag{1}$$

Next, an fundamental matrix E of the camera is determined using formula 2. In the formula 2, $K_1$ and $K_2$ are internal matrices of the camera indicating values of parameters such as a focal length of the camera and a center position of a two-dimensional coordinate. Prescribed values can also be determined and used as the internal matrices $K_1$ and $K_2$ of the camera.

$$E = K_2^T F K_1 \tag{2}$$

Finally, the rotation matrix R and the translation vector T are calculated. The fundamental matrix E can be decomposed into the rotation matrix R and the translation vector T as represented in formula 3.

$$E = T \times R \tag{3}$$

The translation vector T obtained here still includes indefiniteness of a constant multiple, but the processing can proceed to step S323 as it is. In a case where scaling is performed, scaling can be performed by obtaining the camera moving amount from various kinds of measurement devices, more specifically, an inertial measurement unit (IMU) and a global navigation satellite system (GNSS), or from vehicle speed information or map information in a case of an on-vehicle camera.

Among the correspondence points used for the above-described calculation, feature points calculated from an object that is not stationary in a world coordinate system to which the imaging device belongs can be eliminated from the processing. The above-described estimation of the moving amounts of the camera calculates various kinds of parameters while the object is regarded as a stationary object. Thus, an error can occur when the object is a moving object. Thus, removing the feature points calculated from the moving object makes it possible to improve calculation accuracy of the various kinds of parameters. The moving object is determined by classification determination of the object by using an image recognition technique, or by comparing a relative value between a time-series change amount of the acquired distance information and the moving amount of the imaging device.

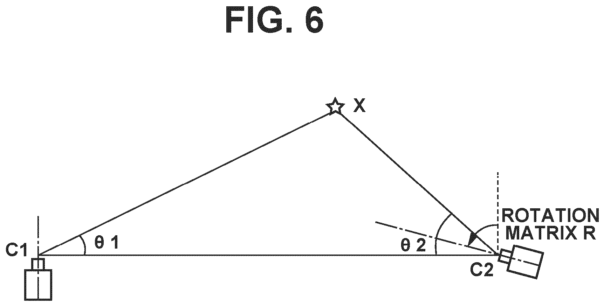

In step S323, three-dimensional position information on a matching point is calculated by a principle of triangulation method using the rotation matrix R and the translation vector T acquired in step S322. The principle of the triangulation method will be described with reference to Fig. 6. Fig. 6 illustrates a coordinate x of the matching point in a three-dimensional space, a coordinate C1 of a center of one camera in the three-dimensional space, and a coordinate C2 of a center of another camera in the three-dimensional space. Angles $\theta 1$ and $\theta 2$ at both ends of a triangle XC1C2 can be calculated from the coordinate of the feature point in the image and the rotation matrix R. When the angles $\theta 1$ and $\theta 2$ are known, a position of an apex can be measured. A relative position when a distance between the coordinates C1 and C2 is normalized as 1 can be calculated.

Alternatively, bundle adjustment, which is a well-known method, can also be used for calculating the rotation moving amount, the translational moving amount of the camera, and the positional relationship between the object and the camera. Relationship of camera internal parameters such as a focal length, the camera fundamental matrix, the correspondence points, and the like can be collectively analytically calculated by a nonlinear least square method with high consistency.

Reliability can also be calculated from the optical system 112-2 and the calculated three-dimensional position information, and the feature point can be eliminated in a case where the reliability is low. In this case, the three-dimensional position information estimated to be erroneously calculated can be removed. This makes it possible to perform subsequent obstacle determination with high accuracy.

The example using SfM is described above; however, the three-dimensional position information can also be calculated from an image acquired using a model previously trained by machine learning and the like.

Depth estimation of a single image (estimation of depth information) can be performed with a convolutional neural network or the like. By using information on the optical system 112-2 of the imaging device 110, the depth information can be converted into the three-dimensional position information. In this case, it is not necessary to detect the feature point, and each image pixel can be regarded as the feature point.

In most of models, indefiniteness of several times remains in a result of the depth estimation, but the processing can proceed to next step S330 as it is as in the above description, or scaling may be performed.

In step S330, the reference-plane height calculation unit 320 calculates a height of a reference plane from the three-dimensional position information acquired by the positional information acquisition unit 310. As the reference plane, a road surface, a floor in a building, or the like can be used.

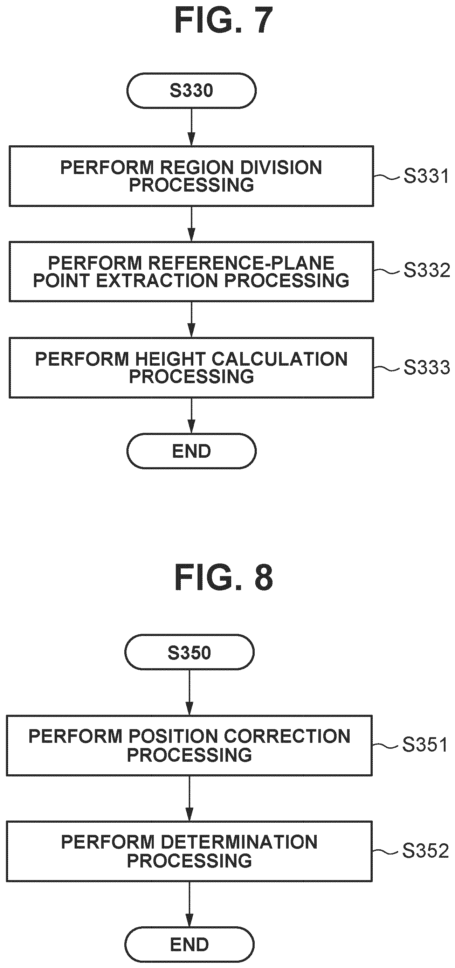

Fig. 7 is a detailed flowchart of a processing flow in step S330. The height of the reference plane can be calculated with any well-known method; however, processing based on the flow illustrated in Fig. 7 will be described below.

In step S331, the image is divided into two or more regions. For example, the image is not divided in a vertical direction, but is divided in a horizontal direction at equal intervals. Alternatively, the image can be divided such that an angle of light entering the imaging element has equal intervals based on the information on the optical system 112-2.

In step S332, feature points estimated to belong to the reference plane are extracted from each of the regions divided in step S331 (region division processing), and a group of extracted points is defined as the reference plane. For example, in a case where the reference plane is set to a road surface, there is a high possibility that a position having the lowest height is the road surface. Thus, the predetermined number of feature points can also be extracted from the points estimated in step S320 in ascending order of the height (or elevation). In this case, extraction of the predetermined number of feature points in ascending order of the estimated height is set as a predetermined condition, and the feature points satisfying the condition are extracted. Alternatively, the predetermined number of feature points can also be extracted from pixel positions corresponding to the reference plane in the image, for example, a lower region of the image.

In step S333, the height (or elevation) of the reference plane is calculated from the three-dimensional position information on the feature points extracted in step S332. For example, an average value, a median value, or a most frequent value of heights (elevations) of the extracted feature points can also be calculated as the height of the reference plane. Alternatively, the feature points are fitted to a specific function of a plane or the like, and the shape can be defined as the reference plane. In this case, accuracy is high because a roll angle and a pitch angle when the imaging device is not horizontal to the reference plane can be considered.

In the processing based on the flow illustrated in Fig. 7, the feature points used for extracting the reference plane are selected from each of the divided regions, which makes it possible to prevent deterioration of accuracy depending on a pixel position.

In step S340, the threshold determination unit 330 determines a threshold based on a ratio of a height and a distance of an obstacle to be detected, namely, a detection target. For example, in a case where an object having a height of B m(meters) or more at a position A m away is set as an obstacle, B/A may be determined as the threshold. In a case where a bump having a depth of D m or more at a position C m away is set as an obstacle, D/C can be determined as the threshold. A plurality of thresholds can also be set.

In step S350, the obstacle determination unit 340 determines whether each of the feature points is an obstacle, from the three-dimensional position information calculated in step S320, the reference-plane height calculated in step S330, and the threshold determined in step S340. Fig. 8 is a detailed flowchart of a processing flow in step S350.

In step S351, a position is corrected based on the reference-plane height calculated in step S330. A target to be corrected is the three-dimensional position information calculated in step S320 or the threshold calculated in step S340.

In a case where the three-dimensional position information is corrected, the coordinate is converted or values of the coordinate are changed such that the reference-plane height becomes zero.

In a case where the threshold is corrected or changed, a value obtained by dividing the reference-plane height by the distance of the point is added to the threshold.

In step S352, the three-dimensional position information and the threshold are compared to determine whether each of the feature points is an obstacle.

In a case where an obstacle is determined based on a fact that the ratio of the height to the distance is greater than the threshold, a falling object, a wall, or the like can be determined as an obstacle. In a case where an obstacle is determined based on a fact that the ratio of the height to the distance is less than the threshold, a bump on the reference plane can be determined as an obstacle. In a case where a plurality of thresholds is set, a determination condition can be defined for each of the thresholds, for example, an obstacle is determined based on a fact that the ratio is greater than a threshold, a fact that the ratio is less than a threshold, or a fact that the ratio is outside a range of thresholds. The outside of the range of the thresholds indicates an outside of a range between an upper limit value and a lower limit value. More specifically, in a case where the ratio is greater than the upper limit value or is less than the lower limit value, it is determined that the ratio is outside the range of the thresholds.

In step S360, the region integration unit 350 determines, among the feature points determined as the obstacle, the neighboring feature points close in distance or the feature points in a predetermined range to be the same object, and performs classification. For example, morphology calculation can also be performed while a value of each of pixels near the feature point that has a distance value in an optional range and is determined to be an obstacle is defined as one, and a value of each of the other pixels is defined as zero. In this case, in a case where obstacles close in distance are present in a certain region, the value of each of the pixels in the region is one, and the region can be determined to be the same object. For example, in a case where a plurality of feature points is detected from the same obstacle, an effect is achievable of not determining that the moving object can move between the plurality of feature points.

In step S370, the distance acquisition device 120 performs measurement to acquire distance information on an object around the vehicle. A distance value at this time is desirably a distance value with a known scale. By acquiring the distance value of the region determined as the obstacle, the distance of the obstacle can be calculated.

More desirably, the distance of the obstacle and the information on the optical system 112-2 can be used to expand the obstacle region up to the pixels indicating the reference plane.

In the image processing device according to the present embodiment, the obstacle determination can be performed by using the ratio of the height to the distance while the scale of the three-dimensional position information is indefinite. Further, since the distance can be measured after the obstacle is detected, the measurement can be performed even when angular resolution of the distance is low.

More desirably, a calibration unit is provided. In this case, an error of a ranging device can be reduced by estimating a coefficient.

The calibration unit performs calibration of the distance value of the obstacle in each of the regions calculated in step S360 with reference to the distance values calculated in step S370. For example, coefficients a and b that minimize a square error in formula 4 can be determined. A value converted using the coefficients a and b is a distance value with an actual scale of the obstacle in each of the regions.

$$D1 = a \times D2 + b \quad (4),$$

where D1 is the distance value calculated in step S370, and D2 is the distance value of the obstacle in each of the regions calculated in step S360.

In a case where a defocus amount is calculated as the distance value in step S370, processing for converting the distance value of the obstacle in each of the regions calculated in step S360 into a defocus amount can also be performed.

A second embodiment of the present invention will be described in detail below with reference to drawings. Components described in the present embodiment are merely illustrative, and the scope of the present invention is not limited to the components described in the present embodiment.

(Device Configuration)

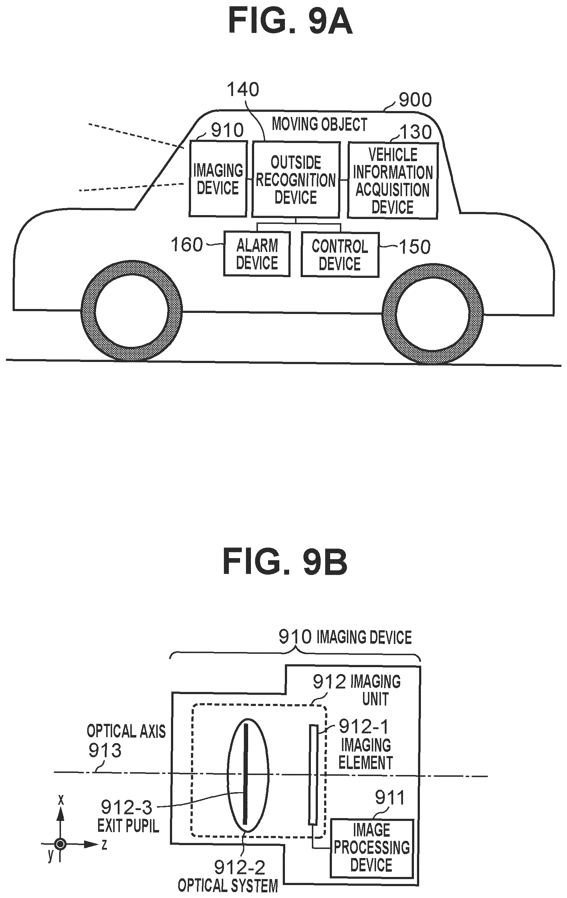

Figs. 9A to 9D are diagrams schematically illustrating a configuration of an image processing device according to the present embodiment. In Figs. 9A to 9D, the components same as the components described with reference to Figs. 1A and 1B are denoted by the same reference numerals as in Figs. 1A and 1B, and description of the components is omitted. Such omission of description will also be applied to an embodiment described below.

In Fig. 9A, a moving object 900 includes an imaging device 910, the vehicle information acquisition device 130, the outside recognition device 140, the control device 150, and the alarm device 160.

The moving object 900 is an object moved by a power source. Examples of the moving object 900 include a vehicle, a vessel, an aircraft, a drone, and an industrial robot. In the following, the moving object 900 is described as a vehicle.

In Fig. 9B, the imaging device 910 includes an image processing device 911 and an imaging unit 912.

The imaging unit 912 includes an imaging element 912-1 and an optical system 912-2. The image processing device 911 can be configured with a logic circuit. As another form of the image processing device 911, the image processing device 911 can include a CPU and a memory storing calculation processing programs.

The optical system 912-2 is an imaging lens of the imaging device 910, and has a function of forming an image of an object on the imaging element 912-1 (on imaging element). The optical system 912-2 includes a plurality of lens groups (not illustrated), a diaphragm (not illustrated), and the like, and includes an exit pupil 912-3 at a position separated by a predetermined distance from the imaging element 912-1. In the present specification, a z-axis is parallel to an optical axis 910 of the optical system 912-2. An x-axis and a y-axis are perpendicular to each other, and are perpendicular to the optical axis.

The imaging element 912-1 is formed from a CMOS or a CCD. An object image formed on the imaging element 912-1 through the optical system 912-2 is photoelectrically converted by the imaging element 912-1, and an image signal based on the object image is generated.

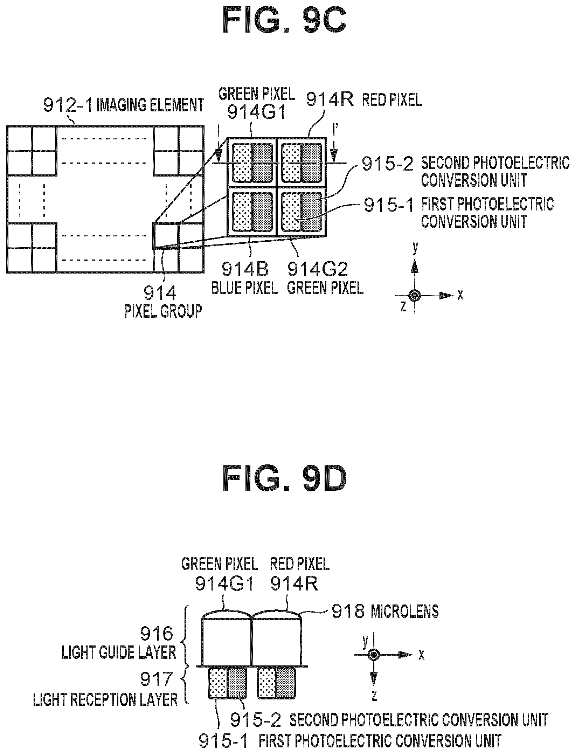

Fig. 9C is an xy cross-sectional view of the imaging element 912-1. The imaging element 912-1 is configured by arranging a plurality of pixel groups 914 each having pixels arranged in two rows and two columns. In each of the pixel groups 914, green pixels 914G1 and 914G2 are arranged in a diagonal direction, and a red pixel 914R and a blue pixel 914B are arranged as the other two pixels.

Fig. 9D is a diagram schematically illustrating a cross-section of one pixel group 914 taken along line I-I'.

Each of the pixels includes a light reception layer 917 and a light guide layer 916. In the light reception layer 917, two photoelectric conversion units (first photoelectric conversion unit 915-1 and second photoelectric conversion unit 915-2) for photoelectrically converting received light are arranged. In other words, a plurality of photoelectric conversion units is provided. In the light guide layer 916, a microlens 918 for efficiently guiding a light flux entering the corresponding pixel to the photoelectric conversion units, a color filter (not illustrated) allowing light in a predetermined wavelength band to pass therethrough, wiring (not illustrated) for image readout and for pixel driving, and the like are arranged. In each of the pixels, wiring (not illustrated) is provided, and each of the pixels can transmit the image signal (output signal) to the image processing device 911 through the wiring. Figs. 9C and 9D illustrate an example of the photoelectric conversion units divided in one pupil dividing direction (x-axis direction); however, depending on a specification, an imaging element including photoelectric conversion units divided in two pupil dividing directions (x-axis direction and y-axis direction) is used. The pupil dividing direction and the number of divisions are optional.

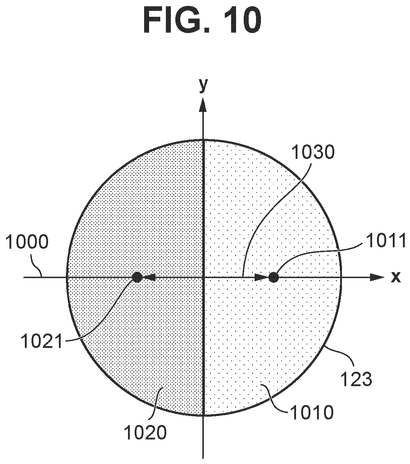

Fig. 10 illustrates the exit pupil 912-3 of the optical system 912-2 as viewed from an intersection (center image height) of the optical axis 910 and the imaging element 912-1. A first light flux that has passed through a first pupil region 1010 and a second light flux that has passed through a second pupil region 1020 respectively enter the first photoelectric conversion unit 915-1 and the second photoelectric conversion unit 915-2. The first pupil region 1010 and the second pupil region 1020 are different regions in the exit pupil 912-3. The first photoelectric conversion unit 915-1 and the second photoelectric conversion unit 915-2 in each of the pixels photoelectrically convert the incident light fluxes, thereby generating image signals corresponding to an A image (first image) and a B image (second image), respectively. The generated image signals are transmitted to the image processing device 911.

Fig. 10 illustrates a centroid position (first centroid position 1011) of the first pupil region 1010 and a centroid position (second centroid position 1021) of the second pupil region 1020. In the present embodiment, the first centroid position 1011 is eccentric (moved) from a center of the exit pupil 912-3 along a first axis 1000. In contrast, the second centroid position 1021 is eccentric (moved) along the first axis 1000 in a direction opposite to the first centroid position 1011. A direction connecting the first centroid position 1011 and the second centroid position 1021 is referred to as the pupil dividing direction. A distance between the first centroid position 1011 and the second centroid position 1021 is a base line length 1030.

(Image Processing Device)

The image processing device 911 will now be described.

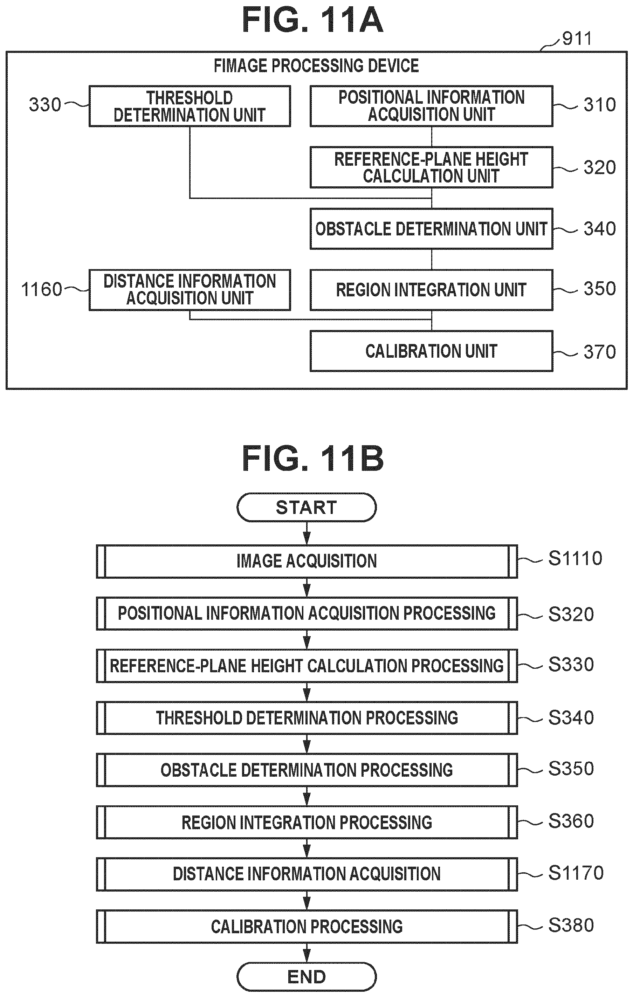

Fig. 11A is a diagram schematically illustrating a configuration of the image processing device 911 according to the present embodiment. In Fig. 11A, the image processing device 911 includes the positional information acquisition unit 310, the reference-plane height calculation unit 320, the threshold determination unit 330, the obstacle determination unit 340, the region integration unit 350, a distance information acquisition unit 1160, and a calibration unit 370. Fig. 11B is a flowchart illustrating operation of the image processing device 911 according to the present embodiment. When image processing according to the present embodiment is started, the processing proceeds to step S1110.

In step S1110, the imaging device 910 performs imaging to generate/acquire an image, and stores the acquired image in a main body memory (not illustrated). The image to be acquired can be any of the A image and the B image, or an image obtained by adding the A image and the B image.

In addition, processing for correcting imbalance of a light amount mainly caused by vignetting of the optical system 912-2 can also be performed on the image acquired in step S1110.

More specifically, imbalance of the light amount can be corrected by performing correction such that a luminance value of the image becomes substantially constant irrespective of an angle of view, based on a result obtained by previously imaging a surface light source having a fixed luminance by the imaging device 910. In addition, filter processing using a bandpass filter, a lowpass filter, or other filters can be performed on the acquired image, for example, to reduce influence of light shot noise and the like generated in the imaging element 912-1. Alternatively, the image can be reduced to reduce a calculation cost. To perform determination of an obstacle with high resolution, resolution of the image can also be increased by a known method.

In step S1170, the distance information acquisition unit 1160 acquires a distance value with an actual scale. In the following, a method will be described of acquiring the distance value from the A image and the B image captured by the imaging device 910.

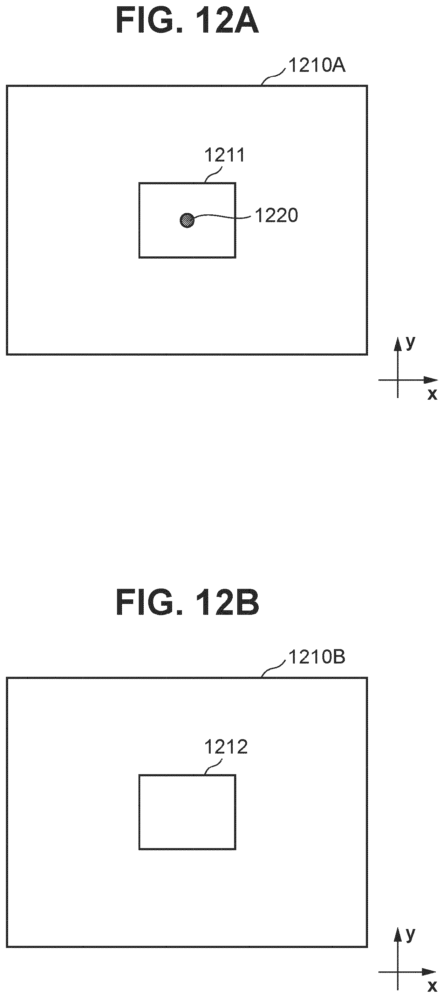

First, a block matching method for calculating parallax from the A image and the B image will be described with reference to Figs. 12A and 12B.

Fig. 12A illustrates an A image 1210A, and Fig. 12B illustrates a B image 1210B. In step S1170, a partial region including a feature point 1220 and neighboring pixels is extracted in the A image 1210A and is set as a standard image 1211. Next, a region having the same area (image size) as the standard image 1211 is extracted in the B image 1210B and is set as a reference image 1212. Next, a position where the reference image 1212 is extracted is moved in the B image 1210, and a correlation value between the reference image 1212 and the standard image 1211 at each moving amount (at each position) is calculated. As a result, a correlation value including a correlation value data row corresponding to the moving amounts is calculated. Finally, the moving amount at which correlation becomes highest is calculated from the correlation value data row, and the moving amount is calculated as parallax.

The correlation value can be calculated by any well-known method as long as correlation between the standard image 1211 and the reference image 1212 can be evaluated. For example, a sum of square difference (SSD), a sum of absolute difference (SAD), or normalized cross-correlation (NCC) can also be used.

Further, sub-pixel estimation that is a well-known method can be performed to calculate more detailed parallax.

A method of converting the parallax into a distance (defocus amount) from the imaging element 912-1 to an imaging point generated by the optical system 912-2 will be described. In the following, a coefficient for converting a parallax amount to the defocus amount is referred to as a BL value. When the BL value is denoted by BL, the defocus amount is denoted by $\Delta L$, and the parallax amount is denoted by d, the parallax amount d can be converted into the defocus amount $\Delta L$ with formula 5.

$$\Delta L = BL \times d \quad (5)$$

A method of converting the defocus amount into a distance will be described. To convert the defocus amount into an object distance, a lens formula in geometrical optics represented by formula 6 can be used.

$$1/A + 1/B = 1/f \quad (6),$$

where A is a distance from an object surface to the optical system 912-2, B is a distance from a principle point of the optical system 912-2 to an image plane, and f is a focal length of the optical system 912-2.

In formula 6, the focal length is a known value. The value B can be calculated with the defocus amount. The distance A to the object surface can thus be calculated using the focal length and the defocus amount.

When the optical system is the same, the defocus amount may be calculated as the distance value because the defocus amount and the distance have a unique relationship.

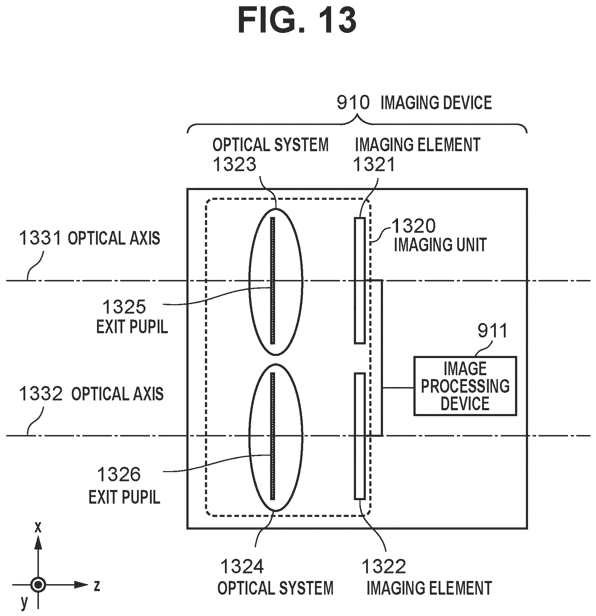

An imaging device 913 can have a configuration illustrated in Fig. 13. An imaging unit 1320 includes two imaging elements 1321 and 1322, and two optical systems 1323 and 1324. The optical systems 1323 and 1324 are imaging lenses of the imaging device 913, and each have a function of forming an image of an object on the imaging element 1321 or 1322. The optical systems 1323 and 1324 each include a plurality of lens groups (not illustrated), a diaphragm (not illustrated), and the like. The optical systems 1323 and 1324 include exit pupils 1325 and 1326 at positions separated by a predetermined distance from the imaging elements 1321 and 1322, respectively. At this time, optical axes of the optical systems 1323 and 1324 are optical axes 1331 and 1332, respectively.

When parameters such as positional relationship of the optical systems are previously calibrated, the distance can be accurately calculated in step S1170. When lens distortion is corrected in each of the optical systems, the distance can also be accurately calculated.

In Fig. 13, two optical systems each acquiring the A image and the B image having a parallax corresponding to the distance are provided; however, the imaging device can also be configured by a stereo camera including three or more optical systems and imaging elements corresponding thereto.

In the image processing device according to the present embodiment, the distance acquisition device is unnecessary, which makes it possible to downsize the device.

The present invention also includes a computer program in addition to the ranging device. The computer program according to the present embodiment causes a computer to perform predetermined steps in order to calculate the distance or the parallax amount. The computer program according to the present embodiment is installed in a computer of the ranging device or the imaging device including the ranging device, such as a digital camera. When the installed computer program is executed by the computer, the above-described functions are realized, and the parallax can be accurately calculated at high speed.

The present invention can also be realized by supplying a program realizing one or more functions of the above-described embodiments to a system or a device through a network or a storage medium, and causing one or more processors in a computer of the system or the device to read out and execute the program. Further, the present invention can also be realized by a circuit (e.g., application specific integrated circuit (ASIC)) for realizing one or more functions.

According to the embodiments, it is possible to provide an image processing device that can determine whether an object is an obstacle from three-dimensional position information with an indefinite scale.

While the present invention has been described with reference to embodiments, it is to be understood that the invention is not limited to the disclosed embodiments but is defined by the scope of the following claims.

**Claims**

1. An image processing device for installation in a moving object (100), the image processing device (111, 911) comprising at least one processor or circuit configured to function as:

   image acquisition means for acquiring an image;
   information acquisition means (310) for setting a feature point in the image, and to acquire height information indicating an elevation of the feature point, and depth information indicating a distance to the feature point;
   reference-plane height calculation means (320) for calculating a height of a predetermined reference plane as a reference-plane height based on the height information; and
   determination means (340) for determining whether the feature point is a feature point indicating a target obstructing movement of the moving object, by using the reference-plane height.

2. The image processing device according to claim 1, wherein the determination means (340) determines whether the feature point is the feature point indicating the target obstructing movement of the moving object, based on a ratio of the height information and the depth information, the reference-plane height, and a threshold.

3. The image processing device according to claim 2, wherein the at least one processor or circuit is configured to further function as threshold determination means (330) for determining the threshold, based on a ratio of a height of a detection target and a distance to the detection target.

4. The image processing device according to claim 2 or 3, wherein the at least one processor or circuit is configured to further function as:

   extraction means for extracting feature points corresponding to a predetermined condition from the image, and to generate an extracted point group; and
   calculation means for calculating the reference-plane height from the height information on each of the extracted feature points configuring the extracted point group.

5. The image processing device according to claim 4, wherein the extraction means vertically or horizontally divides the image into two or more regions, and extracts the feature points from each of the two or more regions.

6. The image processing device according to claim 4 or 5, wherein the extraction means extracts a feature point having the height information less than a predetermined value as the predetermined condition.

7. The image processing device according to claim 4 or 5, wherein the extraction means extracts a feature point at a pixel position corresponding to the reference plane in the image as the predetermined condition.

8. The image processing device according to any one of claims 4 to 7, wherein the calculation means calculates, as the reference-plane height, any one of an average value, a median value, and a most frequent value of the height information on the feature points configuring the extracted point group.

9. The image processing device according to any one of claims 4 to 7, wherein the calculation means fits the extracted point group to a predetermined function, and calculates the function as the reference-plane height.

10. The image processing device according to any one of claims 2 to 9, wherein, in a case where the ratio of the height information to the depth information is greater than the threshold, the determination means determines that the feature point is the feature point indicating the target obstructing movement of the moving object.

11. The image processing device according to any one of claims 2 to 10, wherein, in a case where the ratio of the height information to the depth information is less than the threshold, and the height information is lower than the reference-plane height, the determination means determines that the feature point is the feature point indicating the target obstructing movement of the moving object.

12. The image processing device according to any one of claims 2 to 9, wherein, in a case where the ratio of the height information to the depth information is outside a range between an upper limit value and a lower limit value of the threshold, the determination means determines that the feature point is the feature point indicating the target obstructing movement of the moving object.

13. The image processing device according to any one of claims 2 to 12, wherein the determination means (340) changes a value indicating the height information based on the reference-plane height.

14. The image processing device according to any one of claims 2 to 13, wherein the determination means (340) changes the threshold based on the reference-plane height.

15. The image processing device according to any one of claims 2 to 14, wherein the information acquisition means limits acquisition of the height information and the depth information on a feature point at a position of a predetermined pixel in the image.

16. The image processing device according to any one of claims 2 to 15, wherein the information acquisition means (310) calculates reliability from at least one piece of the height information and the depth information, and information on an optical system having captured the image, and in a case where the reliability is lower than a predetermined value, the information acquisition means limits acquisition of the height information and the depth information.

17. The image processing device according to any one of the preceding claims, wherein the at least one processor or circuit is configured to further function as region integration means (350) for integrating, in a case where two or more pieces of the depth information determined to be the target obstructing movement of the moving object is within a predetermined range, feature points corresponding to the two or more pieces of the depth information, to one object.

18. An image processing method of causing a central processing unit (CPU) for installation in a moving object (100) to determine whether a feature point is a feature point indicating a target obstructing movement of the moving object, the method comprising:

acquiring an image (S310);
setting a feature point in the image, and acquiring height information indicating an elevation of the feature point, and depth information indicating a distance to the feature point;
calculating (S330) a height of a predetermined reference plane as a reference-plane height based on the height information; and
determining (S350) whether the feature point is a feature point indicating a target obstructing movement of the moving object, by using the reference-plane height.

19. A storage medium for storing a program for causing a computer to perform the image processing method according to claim 18.

# FIG. 1A

# FIG. 1B

# FIG. 2

```
              ( START )
                  │
                  ▼
      ┌───────────────────────┐
      │  ACQUIRE OBSTACLE     │ ～ S200
      │     INFORMATION       │
      └───────────────────────┘
                  │
                  ▼
      ┌───────────────────────┐
      │ ACQUIRE VEHICLE INFORMATION │ ～ S210
      └───────────────────────┘
                  │
                  ▼        ～ S220      NO
          ◇ IS DANGER ◇ ──────────────┐
            LEVEL HIGH?                │
                  │                    │
                 YES                   │
                  ▼                    │
      ┌───────────────────────┐        │
      │  PERFORM AVOIDANCE    │ ～ S230  │
      │     OPERATION         │        │
      └───────────────────────┘        │
                  │                    │
                  ▼                    │
      ┌───────────────────────┐        │
      │     ISSUE ALARM       │ ～ S240  │
      └───────────────────────┘        │
                  │                    │
                  ▼◄───────────────────┘
              (  END  )
```

# FIG. 3A

IMAGE PROCESSING DEVICE — 111

| | |
|---|---|
| 330 — THRESHOLD DETERMINATION UNIT | POSITIONAL INFORMATION ACQUISITION UNIT — 310 |
| | REFERENCE-PLANE HEIGHT CALCULATION UNIT — 320 |
| | OBSTACLE DETERMINATION UNIT — 340 |
| | REGION INTEGRATION UNIT — 350 |
| | DISTANCE INFORMATION ACQUISITION UNIT — 360 |

# FIG. 3B

START

IMAGE ACQUISITION — S310

POSITIONAL INFORMATION ACQUISITION PROCESSING — S320

REFERENCE-PLANE HEIGHT CALCULATION PROCESSING — S330

THRESHOLD DETERMINATION PROCESSING — S340

OBSTACLE DETERMINATION PROCESSING — S350

REGION INTEGRATION PROCESSING — S360

DISTANCE INFORMATION ACQUISITION — S370

END

# FIG. 4

```
        ┌─────────────┐
        │    S320     │
        └─────────────┘
               │
               ▼
┌───────────────────────────────┐
│   PERFORM FEATURE POINT       │ ～S321
│   MATCHING PROCESSING         │
└───────────────────────────────┘
               │
               ▼
┌───────────────────────────────┐
│   PERFORM CAMERA MOVING       │ ～S322
│   AMOUNT ESTIMATION PROCESSING│
└───────────────────────────────┘
               │
               ▼
┌───────────────────────────────┐
│   PERFORM THREE-DIMENSIONAL   │ ～S323
│   POSITION CONVERSION PROCESSING│
└───────────────────────────────┘
               │
               ▼
        ┌─────────────┐
        │     END     │
        └─────────────┘
```

# FIG. 5A

FEATURE POINTS OF IMAGE It1

# FIG. 5B

FEATURE POINTS OF IMAGE It2

# FIG. 6

# FIG. 7

S330

PERFORM REGION DIVISION PROCESSING — S331

PERFORM REFERENCE-PLANE POINT EXTRACTION PROCESSING — S332

PERFORM HEIGHT CALCULATION PROCESSING — S333

END

# FIG. 8

S350

PERFORM POSITION CORRECTION PROCESSING — S351

PERFORM DETERMINATION PROCESSING — S352

END

# FIG. 9A

140
900
910
MOVING OBJECT
130

| IMAGING DEVICE | OUTSIDE RECOGNITION DEVICE | VEHICLE INFORMATION ACQUISITION DEVICE |

160 — ALARM DEVICE | CONTROL DEVICE — 150

# FIG. 9B

910 IMAGING DEVICE

912 IMAGING UNIT

OPTICAL AXIS 913

912-1 IMAGING ELEMENT

911

912-3 EXIT PUPIL

IMAGE PROCESSING DEVICE

912-2 OPTICAL SYSTEM

# FIG. 9C

912-1 IMAGING ELEMENT

GREEN PIXEL
914G1

914R RED PIXEL

915-2 SECOND PHOTOELECTRIC
CONVERSION UNIT

915-1 FIRST PHOTOELECTRIC
CONVERSION UNIT

914B
BLUE PIXEL

914G2
GREEN PIXEL

914
PIXEL GROUP

# FIG. 9D

GREEN PIXEL
914G1

RED PIXEL
914R

918 MICROLENS

916
LIGHT GUIDE LAYER

917
LIGHT RECEPTION LAYER

915-2 SECOND PHOTOELECTRIC CONVERSION UNIT

915-1 FIRST PHOTOELECTRIC CONVERSION UNIT

# FIG. 10

# FIG. 11A

**FIMAGE PROCESSING DEVICE** — 911

| 330 — THRESHOLD DETERMINATION UNIT | POSITIONAL INFORMATION ACQUISITION UNIT — 310 |
| | REFERENCE-PLANE HEIGHT CALCULATION UNIT — 320 |
| | OBSTACLE DETERMINATION UNIT — 340 |
| 1160 — DISTANCE INFORMATION ACQUISITION UNIT | REGION INTEGRATION UNIT — 350 |
| | CALIBRATION UNIT — 370 |

# FIG. 11B

START

IMAGE ACQUISITION — S1110

POSITIONAL INFORMATION ACQUISITION PROCESSING — S320

REFERENCE-PLANE HEIGHT CALCULATION PROCESSING — S330

THRESHOLD DETERMINATION PROCESSING — S340

OBSTACLE DETERMINATION PROCESSING — S350

REGION INTEGRATION PROCESSING — S360

DISTANCE INFORMATION ACQUISITION — S1170

CALIBRATION PROCESSING — S380

END

# FIG. 12A

1210A

1211

1220

y

x

# FIG. 12B

1210B

1212

y

x

# FIG. 13

910 IMAGING DEVICE

OPTICAL SYSTEM
1323

IMAGING ELEMENT
1321

1331 OPTICAL AXIS

1325
EXIT PUPIL

1320
IMAGING UNIT

911

IMAGE
PROCESSING
DEVICE

1332 OPTICAL AXIS

1326
EXIT PUPIL

1324
OPTICAL SYSTEM

1322
IMAGING ELEMENT

x
z
y

Europäisches
Patentamt

European
Patent Office

Office européen
des brevets

# EUROPEAN SEARCH REPORT

**Application Number**

EP 25 16 8982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/070221 A1 (SHIGEMURA SHUSAKU [JP] ET AL) 9 March 2023 (2023-03-09) | 1,17-19 | INV.<br>G06V20/56 |
| A | * paragraphs [0014], [0015]; claim 1; figure 4 * | 2-16 | G06V20/58 |
| | ----- | | |
| X | US 6 487 303 B1 (YAMAGUCHI HIROYOSHI [JP] ET AL) 26 November 2002 (2002-11-26) | 1,17-19 | |
| A | * column 1, line 52 - column 2, line 11; figure 1 *<br>* column 2, line 48 - column 3, line 10 *<br>* column 4, line 36 - column 5, line 14 *<br>* column 7, line 30 - column 8, line 28 * | 2-16 | |
| | ----- | | |
| X | US 9 886 649 B2 (HITACHI AUTOMOTIVE SYSTEMS LTD [JP])<br>6 February 2018 (2018-02-06) | 1,17-19 | |
| A | * column 4, lines 16-58; figures 4A,4B1,4B2 *<br>* column 6, lines 8-27 *<br>* column 7, lines 32-67 * | 2-16 | |
| | | | **TECHNICAL FIELDS SEARCHED (IPC)** |
| | * column 9, line 7 - column 10, line 25 * | | |
| | ----- | | G06V |
| A | WO 2011/090053 A1 (CLARION CO LTD [JP]; IWANO HIROTAKA [JP])<br>28 July 2011 (2011-07-28)<br>* See translation;<br>page 2, line 1 - page 3, line 13 * | 1-19 | |
| | ----- | | |

The present search report has been drawn up for all claims

| Place of search | Date of completion of the search | Examiner |
|---|---|---|
| The Hague | 17 July 2025 | Meurisse, Wim |

EPO FORM 1503 03.82 (P04C01)

## ANNEX TO THE EUROPEAN SEARCH REPORT
## ON EUROPEAN PATENT APPLICATION NO.

EP 25 16 8982

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | | Publication date | Patent family member(s) | | Publication date |
|---|---|---|---|---|---|
| US 2023070221 | A1 | 09-03-2023 | JP | 7561107 B2 | 03-10-2024 |
| | | | JP | 2023039777 A | 22-03-2023 |
| | | | US | 2023070221 A1 | 09-03-2023 |
| US 6487303 | B1 | 26-11-2002 | AU | 4884697 A | 29-05-1998 |
| | | | JP | H10143659 A | 29-05-1998 |
| | | | US | 6487303 B1 | 26-11-2002 |
| | | | WO | 9820455 A1 | 14-05-1998 |
| US 9886649 | B2 | 06-02-2018 | EP | 3057063 A1 | 17-08-2016 |
| | | | JP | 6151150 B2 | 21-06-2017 |
| | | | JP | 2015075800 A | 20-04-2015 |
| | | | US | 2016253575 A1 | 01-09-2016 |
| | | | WO | 2015053100 A1 | 16-04-2015 |
| WO 2011090053 | A1 | 28-07-2011 | JP | 5580062 B2 | 27-08-2014 |
| | | | JP | 2011149810 A | 04-08-2011 |
| | | | WO | 2011090053 A1 | 28-07-2011 |

EPO FORM P0459

For more details about this annex : see Official Journal of the European Patent Office, No. 12/82

**REFERENCES CITED IN THE DESCRIPTION**

**Patent documents cited in the description**

- JP 2018156222 A

- JP 2023039777 A